(19) **Europäisches Patentamt**

**European Patent Office**

**Office européen des brevets**

(11) **EP 1 004 847 A1**

(12) **EUROPÄISCHE PATENTANMELDUNG**

(43) Veröffentlichungstag:
31.05.2000 Patentblatt 2000/22

(51) Int. Cl.⁷: **G01B 11/24**

(21) Anmeldenummer: **99122886.7**

(22) Anmeldetag: **18.11.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **27.11.1998 EP 98811180**

(71) Anmelder: **KOMAX HOLDING AG**
**6036 Dierikon (CH)**

(72) Erfinder:
• **Meisser, Claudio, El.-Ing. ETH**
  **6330 Cham (CH)**
• **Egli, Tony, El.-Ing. HTL**
  **6280 Hochdorf (CH)**
• **Ehlert, Hilmar, El.-Ing.HTL**
  **6003 Luzern (DE)**

(74) Vertreter: **Blöchle, Hans**
**Inventio AG,**
**Seestrasse 55,**
**Postfach**
**6052 Hergiswil (CH)**

(54) **Verfahren und Einrichtung zur Erkennung von Kantenstrukturen**

(57)    Ein zu prüfendes Kabel (1) besteht aus einem elektrischen Leiter (2) und aus einer Isolation (3). Auf die Isolation (3) ist eine Tülle (4) aufgesetzt. Das gezeigte Kabelende ist für eine Crimpverbindung vorbereitet, wobei der elektrische Leiter (2) mittels Leitercrimp und Isolation (3) und Tülle (4) mittels Isolationscrimp mit einem Kontakt verbunden werden. Die Abmessungen der Leitercrimpzone und der Isolationscrimpzone des Kontaktes bestimmen den Abstand des Isolationsendes (5) zum Leiterende (6) und den Abstand des Tüllenendes (7) zum Isolationsende (5). Zur Prüfung der Tüllenposition wird das Kabel (1) über eine Blende (8) bewegt, wobei die Blende (8) je nach momentaner Kantenstruktur des Kabels (1) mehr oder weniger abgedeckt wird, wobei die die Blende (8) passierende Lichtmenge je nach der Kantenstruktur des Kabels (1) verändert wird. Aus der passierenden Lichtmenge sind die Kantenstrukturen des Kabels (1) darstellbar.

Fig. 1

EP 1 004 847 A1

**Beschreibung**

Die Erfindung betrifft ein Verfahren und eine Einrichtung zur berührungslosen Erkennung von Kantenstrukturen eines Prüflings, wobei die mittels des Prüflings veränderbare Lichtmenge einer Lichtquelle gemessen wird und aufgrund der Lichtmengenmessung die Kantenstrukturen des Prüflings darstellbar sind.

Aus der Schrift EP 0 196 514 ist eine Einrichtung zur Detektion von beispielsweise Halbleitergehäusen bekannt geworden. Die Kanten der Halbleitergehäuse werden mittels eines Mikroskopes auf eine Bildmatrix eines CCD Bildwandlers abgebildet. Der CCD Bildwandler setzt das auf seine Bildmatrix fokussierte Bild in einzelne elektrische Ladungen um, die dann zeilenweise ausgelesen und bildpunktweise digitalisiert werden. Die Helligkeitswerte der Bildpunkte werden zeilen- und spaltenweise abgespeichert und zu Ortskoordinaten der aufzufindenden Kanten aufbereitet.

Ein Nachteil der bekannten Einrichtung liegt darin, dass die auf dem Bildverarbeitungsprinzip arbeitende Einrichtung für die Detektion von einfachen Strukturen wie beispielsweise Kanten sehr aufwendig und dementsprechend teuer ist. Ausserdem ist diese Einrichtung fremdlichtempfindlich.

Hier will die Erfindung Abhilfe schaffen. Die Erfindung, wie sie in Anspruch 1 gekennzeichnet ist, löst die Aufgabe, die Nachteile der bekannten Einrichtung zu vermeiden und eine Einrichtung zur Erkennung von einfachen Kantenstrukturen mit einfachen Mitteln zu schaffen.

Die durch die Erfindung erreichten Vorteile sind im wesentlichen darin zu sehen, dass die Erfassung der Kantenstrukturen vereinfacht wird. Die Körper mit den zu erfassenden Strukturen können mit einer einfachen, automatisierbaren Bewegung durch den Messbereich bewegt werden, wobei die Kantenstrukturen während der Bewegung erfasst werden. Durch den einfachen Aufbau der Messeinrichtung und durch die einfache Messmethode kann auch die für eine automatische Produktion notwendige, zudienende Automatik einfach aufgebaut sein. Die serielle Fertigung der Körper mit den zu erfassenden Kantenstrukturen (Prüflinge) kann mit der vorgeschlagenen Einrichtung qualitativ und produktiv verbessert werden. Im weiteren ist die vorgeschlagene Messeinrichtung kostengünstig, fremdlichtunabhängig und hat eine mit einer auf dem Bildverarbeitungsprinzip arbeitenden Einrichtung vergleichbare Genauigkeit.

Im folgenden wird die Erfindung anhand von ein Ausführungsbeispiel darstellenden Zeichnungen näher erläutert.

Es zeigen:

Fig. 1      ein über eine Blende bewegter Prüfling,

Fig. 2      die die Blende passierende Lichtmenge in Abhängigkeit der Kantenstruktur des Prüflings,

Fig. 3      ein der passierenden Lichtmenge entsprechendes elektrisches Signal,

Fig. 3a      ein in digitale Werte gewandeltes elektrisches Signal,

Fig. 4      ein aus dem elektrischen Signal berechnetes Histogramm,

Fig. 5      ein gewichtetes Histogramm zur Bestimmung der Kantenstruktur des Prüflings und

Fig. 6      eine Einrichtung zur Erzeugung des elektrischen Signales.

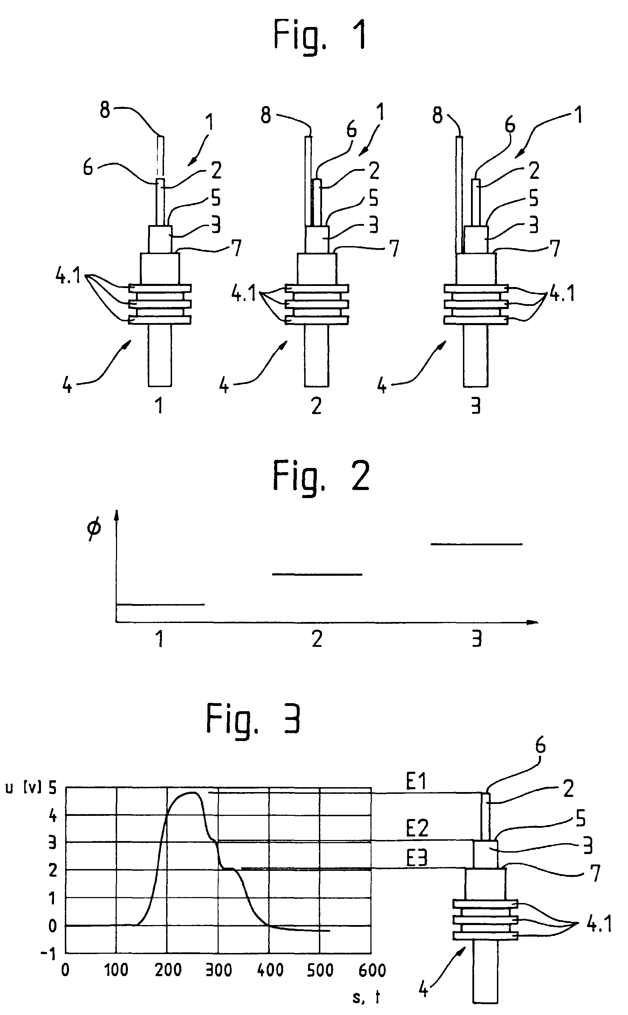

In den Fig. 1 bis 6 ist mit 1 ein Prüfling, beispielsweise ein elektrisches Kabel bezeichnet. Das Kabel 1 besteht aus einem elektrischen Leiter 2 und einer Isolation 3. Auf die Isolation 3 ist eine Tülle 4 aufgesetzt. Das gezeigte Kabelende ist für eine Crimpverbindung vorbereitet, bei der ein nicht dargestellter Kontakt mit dem Kabel 1 verbunden wird, wobei der elektrische Leiter 2 mittels Leitercrimp und Isolation 3 und Tülle 4 mittels Isolationscrimp mit dem Kontakt verbunden werden. Der Leitercrimp stellt die elektrische Verbindung des Leiters mit dem Kontakt sicher, der Isolationscrimp dient der Zugentlastung des Kabels 1 gegenüber dem Leiter 2. Die Abmessungen der Leitercrimpzone und der Isolationscrimpzone des Kontaktes bestimmen den Abstand des Isolationsendes 5 zum Leiterende 6 und den Abstand des Tüllenendes 7 zum Isolationsende 5. In der Regel werden Isolation 3 und Tülle 4 gemeinsam in der Isolationscrimpzone mit dem Kontakt verbunden. Die gezeigte Tülle 4 weist Rippen 4.1 auf, die der Abdichtung einer Kabeleinführung in ein Gehäuse dienen.

Wie in Fig. 1 gezeigt, wird der Prüfling 1 über eine Blende 8 bewegt, wobei die Blende 8 je nach momentaner Kantenstruktur des Prüflings 1 mehr oder weniger abgedeckt wird. Die Blendenbreite ist so bemessen, dass die Blende 8 vom Leiter 2 in der Breite vollständig abgedeckt ist. Die Leiterbreite ist beispielsweise ein Mehrfaches der Blendenbreite. Das Verhältnis Leiterbreite zu Blendenbreite ist von untergeordneter Bedeutung, weil die die Blende 8 passierende Lichtmenge $\phi$ gemessen wird. Fig. 2 zeigt die die Blende 8 passierende Lichtmenge $\phi$ bei den Positionen 1, 2 und 3 des Prüflings 1 über der Blende 8.

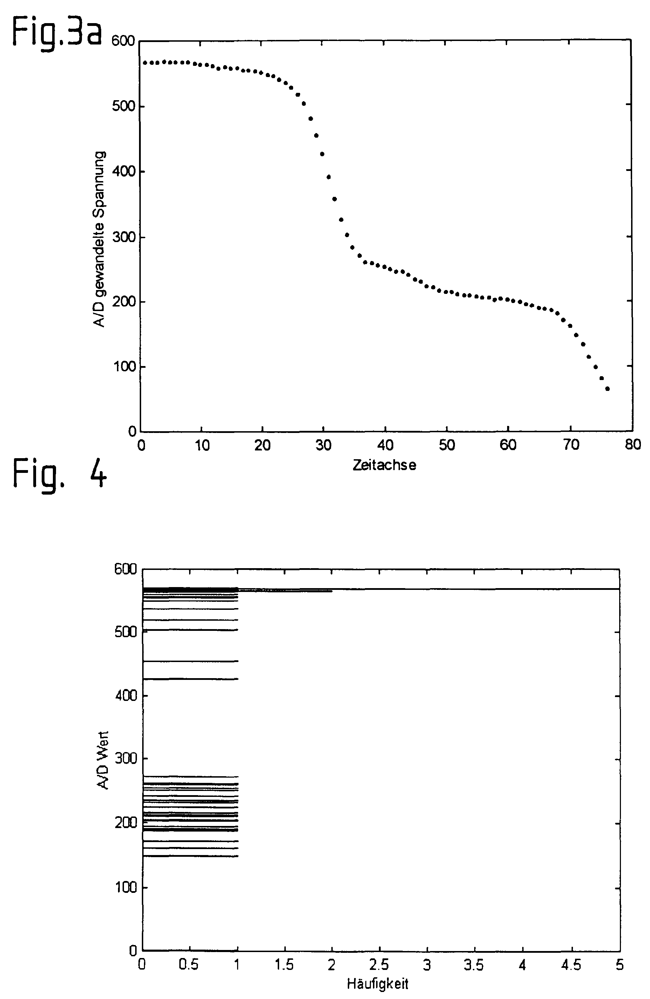

Wenn nun der Prüfling 1 kontinuierlich über die Blende 8 bewegt wird, ändert sich die die Blende 8 passierende Lichtmenge ɸ auch kontinuierlich entsprechend der Kantenstruktur des Prüflings 1. Die sich ändernde Lichtmenge ɸ kann wie in Fig. 3 dargestellt in ein elektrisches Signal U umgewandelt werden, wobei auf der Abzisse ein Weg s oder eine Zeit t aufgetragen ist. Das Kabel 1 mit der aufgesetzten Tülle 4 hat zur Kabellängsachse zwei symmetrische Kantenstrukturen. Beim Bewegen des Kabels 1 über der Blende 8 entsteht eine symmetrische Kurve der Lichtmenge ɸ bzw. eine symmetrische Kurve des elektrischen Signales U. Im Beispiel der Fig. 3 ist das Kabel 1 leicht schräg zur Blende bewegt worden, wodurch eine Kurvenhälfte aussagekräftiger bezüglich Leiterende 6, Isolationsende 6 und Tüllenende 7 wird. Das Signal U weist auf der einen Hälfte eindeutige Ebenen E1, E2, E3 auf, die dem Leiterende 6, dem Isolationsende 5 bzw. dem Tüllenende 7 entsprechen. Mit der Lage der Ebenen E1, E2, E3 kann der Abstand des Isolationsendes 5 zum Leiterende 6 und der Abstand des Tüllenendes 7 zum Isolationsende 5 bestimmt werden.

Zur Ermittlung der Ebenen E1, E2, E3 wird wie in Fig. 3a dargestellt das analoge Signal U in digitale Werte gewandelt. Fig. 3a zeigt einen Ausschnitt der Fig. 3, wobei der Ausschnitt beispielsweise den Bereich der Ebene E3 zeigt. Ein Punkt bedeutet eine bestimmte Spannung in digitaler Form zu einer bestimmten Zeit.

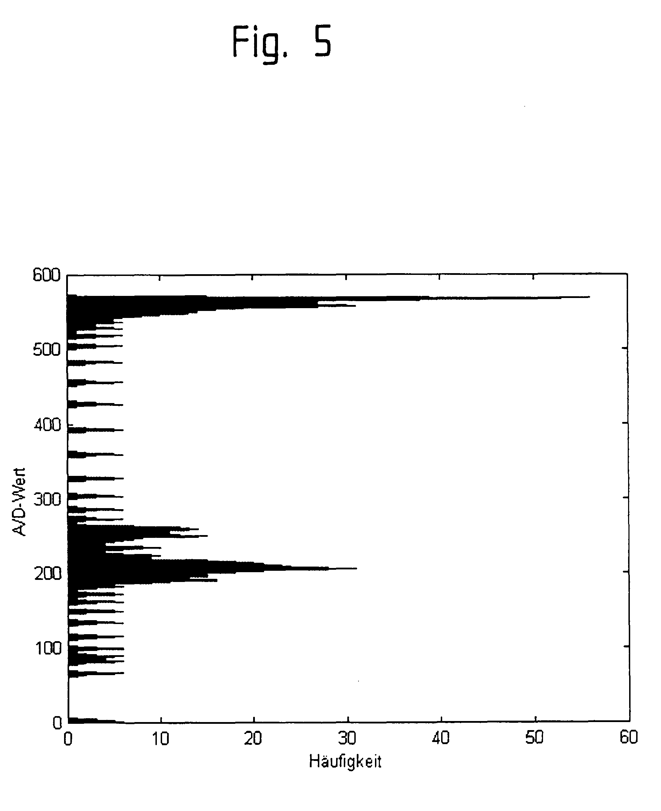

Das in Fig. 4 gezeigte Histogramm ist eine statistische Darstellung der Messwerte gemäss Fig. 3a. Das Histogramm gibt an, welcher Messwert in digitaler Form wie oft in dem zu analysierenden Signal vorkommt. Beispielsweise kommt der digitale Wert 100 nullmal vor, hingegen kommen viele Werte im Bereich zwischen 200 und 300 oder zwischen 500 und 600 mit der Häufigkeit 1 bzw. einmal vor. Aus der Verdichtung der Werte sind die Lagen der Ebenen E1, E2, E3 jedoch nicht eindeutig feststellbar, weil pro Erfassung der Kantenstrukturen nur eine beschränkte Anzahl Messwerte vorhanden sind. Aus diesem Grund wird ein gewichtetes Histogramm gemäss Fig. 5 ermittelt, welches die nähere Umgebung der Messwerte in die Berechnung einbezieht. Die der Fehlervermeidung dienende Gewichtung kann beispielsweise nach folgender Beziehung erfolgen:

$$\text{Gewichteter Hystogrammwert (j)} = \sum_{i=-b}^{+b} \text{Hystogrammwerte (j + i)} * \text{faktor(i)}$$

wobei

j die Position auf der Ordinate ist, an welcher der gewichtete Wert berechnet wird,
faktor ein Gewichtungsvektor, bestehend aus 2*b+1 Elementen ist,
i eine Laufvariable im Bereich -b bis +b ist und
b eine Anzahl Werte (Samples) um j herum ist, wobei beispielsweise 5 Werte beidseitig von j berücksichtigt werden.

Nach der Ermittlung des gewichteten Histogrammes werden die Maximas und deren gegenseitigen Abstände bestimmt, die wiederum ein Mass für das Leiterende 6, das Isolationsende 5 bzw. das Tüllenende 7 sind.

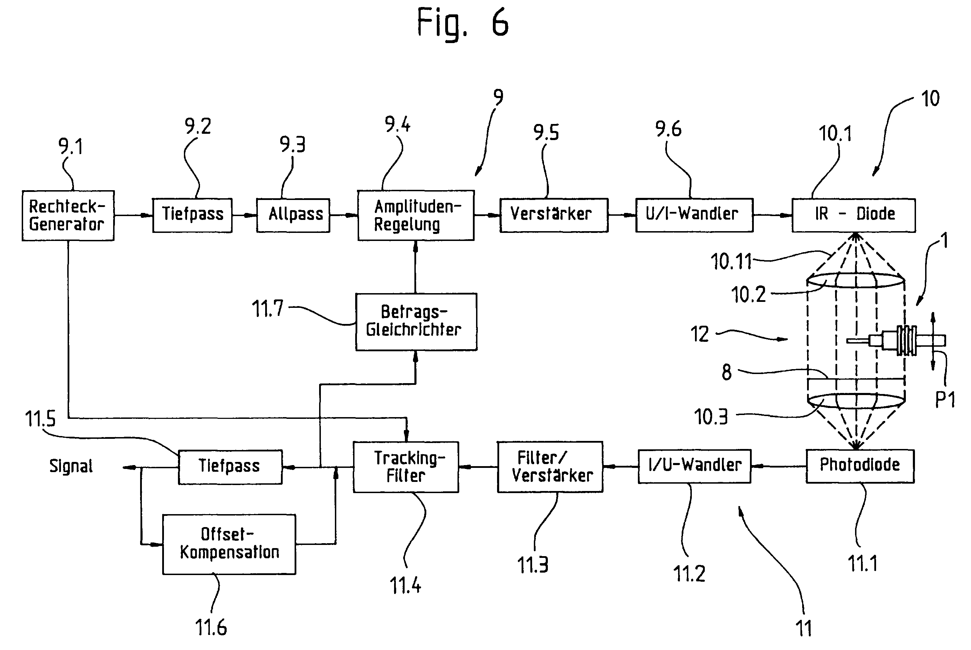

Fig. 6 zeigt eine Einrichtung zur Erzeugung des Signals U bestehend aus einem Sendeteil 9, einem optischen Teil 10 und einem Empfangsteil 11. Im Sendeteil 9 erzeugt ein Generator 9.1 ein Rechtecksignal mit beispielsweise 100kHz. Ein Tiefpassfilter 9.2 filtert aus dem Rechtecksignal eine Sinus-Grundschwingung heraus, die als Trägerfrequenz dient. Mittels eines Allpasses wird die Phasenlage des Signales abgeglichen. Das Sinussignal wird multiplikativ mit der Stellgrösse eines Amplitudenreglers 9.4 verknüpft und anschliessend in einem ersten Verstärker 9.5 verstärkt. Das angepasste Sinussignal wird mittels eines U/I-Wandlers 9.6 in einen proportionalen Diodenstrom umgeformt, der einer IR-Diode 10.1 des optischen Teils 10 zugeführt wird. Die IR-Diode 10.1 dient als punktförmige Infrarot-Lichtquelle, deren Strahlengang 10.11 mittels einer Linse 10.2, beispielsweise einer Fresnellinse, parallel gerichtet wird. Anschliessend folgt ein Messbereich 12, den der Prüfling 1 durchquert. Der parallele Strahlengang 10.11 wird über die Blende 8 und eine Sammellinse 10.3 auf eine Photodiode 11.1 des Empfangsteils 11 geleitet. Weil der Strahlengang zwischen den Linsen 10.2, 10.3 parallel ist, ist die Erkennung der Kantenstrukturen unabhängig von einer Verschiebung P1 des Prüflings 1 längs des parallelen Strahlenganges 10.11.

Die Photodiode 11.1 wandelt die jenseits der Blende 8 auftretende Lichtmenge ɸ in einen Strom um, der im nachgeschalteten I/U-Wandler 11.2 in eine Spannung umgesetzt wird. Das Spannungssignal wird mittels Verstärker 11.3 und einem als Synchron-Demodulator arbeitendes Tracking-Filter 11.4 zugeführt, das die als Trägerfrequenz dienende Sinus-Grundschwingung entfernt. Anschliessend wird das Signal mittels Tiefpass 11.5 und Offset-Kompensator 11.6 zum Signal U aufbereitet. Mit der Verwendung einer Trägerfrequenz und einer Synchrondemodulation werden die Fremdlichteinflüsse, die im Signal der Photodiode 11.1 vorhanden sind, auf ein sich nicht mehr störend auswirkendes Mass reduziert.

Der Amplitudenregler 9.4 nutzt das nicht aufbereitete Signal als Istwert. Dieses wird mittels eines Gleichrichters 11.7 gleichgerichtet und ist die Stellgrösse des als PI-Reglers konzipierten Amplitudenreglers 9.4, wobei das Ausgangssignal die Amplitude der Sinus-Grundschwingung und dadurch die Sendeleistung der IR-Diode 10.1 steuert. Mit der Amplitudenregelung werden die temperaturbedingten Parameteränderungen der einzelnen elektronischen Komponenten reduziert.

## Patentansprüche

1.  Verfahren zur berührungslosen Erkennung von Kantenstrukturen eines Prüflings (1), wobei die mittels des Prüflings (1) veränderbare Lichtmenge einer Lichtquelle gemessen wird und aufgrund der Lichtmengenmessung die Kantenstrukturen des Prüflings (1) darstellbar sind,
    dadurch gekennzeichnet,

    dass der Prüfling (1) über eine Blende (8) bewegt wird, wobei sich die die Blende (8) passierende Lichtmenge ($\phi$) je nach der Kantenstruktur des Prüflings (1) verändert und
    dass aus der passierenden Lichtmenge ($\phi$) die Kantenstrukturen des Prüflings (1) darstellbar sind.

2.  Verfahren nach Anspruch 1,
    dadurch gekennzeichnet,

    dass die sich ändernde Lichtmenge ($\phi$) in ein elektrisches Signal (U) umgewandelt wird und
    dass das digitalisierte Signal (U) statistisch ausgewertet wird.

3.  Verfahren nach Anspruch 2,
    dadurch gekennzeichnet,

    dass mittels der statistischen Auswertung die Kantenstrukturen des Prüflings (1) bestimmt werden.

4.  Einrichtung zur Erkennung von Kantenstrukturen eines Prüflings (1), bestehend aus einer Einheit zur Erfassung der mittels des Prüflings (1) veränderbaren Lichtmenge einer Lichtquelle und bestehend aus einer Einheit zur Auswertung der veränderbaren Lichtmenge, wobei mit der Einheit zur Auswertung der veränderbaren Lichtmenge die Kantenstrukturen darstellbar sind,
    dadurch gekennzeichnet,

    dass eine Blende (8) vorgesehen ist, durch die die mittels des Prüflings (1) veränderbare Lichtmenge ($\phi$) der Einheit zur Auswertung der veränderbaren Lichtmenge ($\phi$) zuführbar ist.

5.  Einrichtung nach Anspruch 4,
    dadurch gekennzeichnet,

    dass ein Sendeteil (9) zur Speisung eines optischen Teiles (10) mit der Lichtquelle (10.1) und der Blende (8) und ein Empfangsteil (11) zur Auswertung der veränderbaren Lichtmenge ($\phi$) vorgesehen ist.

6.  Einrichtung nach Anspruch 5,
    dadurch gekennzeichnet,

    dass der Sendeteil (9) einen Generator (9.1,9.2,9.3) zur Erzeugung einer Trägerfrequenz und einen Amplitudenregler (9.4) zur Modulation der Trägerfrequenzamplitude aufweist, wobei die modulierte Trägerfrequenz die Lichtquelle (10.1) des optischen Teils (10) speist.

7.  Einrichtung nach Anspruch 5,
    dadurch gekennzeichnet,

    dass der optische Teil (10) eine IR-Diode (10.1) als punktförmige Lichtquelle aufweist,
    dass eine Linse (10.2) zur Erzeugung eines parallelen in der Lichtmenge mittels des Prüflings (1) veränderbaren Strahlenganges (10.11) vorgesehen ist und
    dass der Strahlengang (10.11) durch die Blende (8) und mittels einer Sammellinse (10.3) punktförmig einer Photodiode (11.1) zuführbar ist, die die auftretende Lichtmenge in ein elektrisches Signal umwandelt.

8. Einrichtung nach Anspruch 5,
dadurch gekennzeichnet,

dass der Empfangsteil (11) einen Synchron-Demodulator (11.4) aufweist, der die Trägerfrequenz vom Signal der Photodiode (11.1) entfernt.

9. Einrichtung nach Anspruch 6,

dass der Amplitudenregler (9.4) mit dem Ausgang des Synchron-Demodulators (11.4) verbunden ist, wobei das Ausgangssignal des Synchron-Demodulators (11.4) als Istwert des Amplitudenreglers (9.4) dient.

# Fig. 1

# Fig. 2

# Fig. 3

**Fig.3a**

**Fig. 4**

# Fig. 5

# Fig. 6

EP 1 004 847 A1

# EP 1 004 847 A1

Europäisches
Patentamt

**EUROPÄISCHER RECHERCHENBERICHT**

Nummer der Anmeldung

EP 99 12 2886

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | FR 2 455 264 A (BOSCH GMBH ROBERT) 21. November 1980 (1980-11-21) * Seite 4; Abbildungen 1-3 * | 1,4,5,7 | G01B11/24 |
| Y | | 2,3 | |
| Y | GB 2 268 268 A (T & N TECHNOLOGY LTD) 5. Januar 1994 (1994-01-05) * Seite 8; Abbildungen 2-4 * | 2,3 | |
| A | EP 0 338 446 A (BALL CORP) 25. Oktober 1989 (1989-10-25) * Zusammenfassung; Abbildung 1 * | 1,4 | |
| A | PATENT ABSTRACTS OF JAPAN vol. 010, no. 327 (P-513), 7. November 1986 (1986-11-07) & JP 61 133844 A (SHIN MEIWA IND CO LTD), 21. Juni 1986 (1986-06-21) * Zusammenfassung * | 1,4 | |

**RECHERCHIERTE SACHGEBIETE (Int.Cl.7)**

G01B

Der vorliegende Recherchenbericht wurde für alle Patentansprüche erstellt

| Recherchenort | Abschlußdatum der Recherche | Prüfer |
|---|---|---|
| BERLIN | 2. Februar 2000 | Vorropoulos, G |

KATEGORIE DER GENANNTEN DOKUMENTE

X : von besonderer Bedeutung allein betrachtet
Y : von besonderer Bedeutung in Verbindung mit einer
      anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
      nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
      Dokument

EPO FORM 1503 03.82 (P04C03)

10

**ANHANG ZUM EUROPÄISCHEN RECHERCHENBERICHT
ÜBER DIE EUROPÄISCHE PATENTANMELDUNG NR.**

EP 99 12 2886

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-02-2000

| Im Recherchenbericht angeführtes Patentdokument | Datum der Veröffentlichung | Mitglied(er) der Patentfamilie | | Datum der Veröffentlichung |
|---|---|---|---|---|
| FR 2455264 A | 21-11-1980 | DE | 2916862 A | 06-11-1980 |
| | | IT | 1141310 B | 01-10-1986 |
| GB 2268268 A | 05-01-1994 | KEINE | | |
| EP 0338446 A | 25-10-1989 | US | 4872757 A | 10-10-1989 |
| | | JP | 2042307 A | 13-02-1990 |
| | | US | 4863275 A | 05-09-1989 |
| JP 61133844 A | 21-06-1986 | JP | 1858857 C | 27-07-1994 |
| | | JP | 5063742 B | 13-09-1993 |

EPO FORM P0461

Für nähere Einzelheiten zu diesem Anhang : siehe Amtsblatt des Europäischen Patentamts, Nr.12/82